(19)

**Europäisches Patentamt**
**European Patent Office**
**Office européen des brevets**

(11) **EP 3 396 317 A1**

(12) **EUROPEAN PATENT APPLICATION**

(43) Date of publication:
**31.10.2018 Bulletin 2018/44**

(51) Int Cl.:
**G01C 21/16** *(2006.01)*          **G06Q 40/08** *(2012.01)*

(21) Application number: **17382221.4**

(22) Date of filing: **26.04.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Telefonica Digital España, S.L.U.**
**28013 Madrid (ES)**

(72) Inventors:
• **ARNAU RUBIO, Oriol**
**28013 MADRID (ES)**

• **HERNÁNDEZ SÁNCHEZ, Sara**
**28013 MADRID (ES)**
• **SERRANO ROMERO, Javier**
**28013 MADRID (ES)**
• **FERNÁNDEZ POZO, Rubén**
**28013 MADRID (ES)**
• **HERNÁNDEZ GÓMEZ, Luis Alfonso**
**28013 MADRID (ES)**

(74) Representative: **Herrero & Asociados, S.L.**
**Cedaceros, 1**
**28014 Madrid (ES)**

(54) **METHOD AND DEVICE FOR CLASSIFYING DRIVING MANEUVERS IN A VEHICLE**

(57)     A mobile user device (1) and method for classifying driving maneuvers in a vehicle, comprising:
- Data acquisition (11) from an IMU of a mobile device (1) located in the vehicle
- Detection (12) of driving maneuver events (124) by using the data acquired (11), including the detection of position changes (122) of the mobile device (1) to define driving time segments,
- Gravity vector (13) estimation for each defined segment,
- Driving direction vector (413) estimation (14) for each segment using the gravity vector (13) and the detected event (124)
- Event classification (15) by determining whether the detected driving maneuver event (124) is a brake/ acceleration event (152) a left/right event (153) or bumps/potholes event (154) based on the driving direction vector (413) and the gravity vector (13) and additional vectors calculated from them.

EP 3 396 317 A1

## Description

### Field of the invention

The present invention has its application within the telecommunication sector, more specifically, relates to energy-efficient strategies for characterizing driving maneuvers of a driver in a vehicle based on data collected from sensors commonly embedded in user terminals such as smartphones and tablets.

More particularly, the present invention refers to a mobile user device and method for classifying driving maneuvers, based only on tri-axial accelerometers and gyroscope signals from the mobile device.

### Background of the invention

The use of Global navigation satellite systems (GNSS) and Inertial Measurement Units (IMU) in smartphones has been highly increased in the last years. These systems are essential for new innovation in location-based services (LBS) and applications aimed to user activity monitoring. One of the most developed domains is smartphone-based driver behavior for insurance telematics, as we can see in "Driving Behavior Analysis for Smartphone-based Insurance Telematics" by Wahlström et al. (Proceedings of the 2nd workshop on Workshop on Physical Analytics, pp. 19-24, ACM, 2015).

One of the greatest challenges identified in Wahlström et al. is the high battery cost of activating the Gepositional devices as Global Positioning System (GPS). Some proposals have been given in order to have an intelligent procedure to reduce battery cost of geolocation systems. Some references which are oriented to this aim are presented in "Intelligent Energy-Efficient Triggering of Geolocation Fix Acquisitions Based on Transitions between Activity Recognition States" by Phan (Mobile Computing, Applications and Services Springer International Publishing, pp. 104-121, 2013). Phan proposes a geolocation triggered with regard to specific activity modes (driving, walking, and running) using energy efficient tridimensional accelerometer data.

Another reference is "A method to evaluate the energy-efficiency of wide-area location determination techniques used by smartphones" by Oshin et al. (IEEE 15th International Conference on Computational Science and Engineering, CSE, pp. 326-333, 2012), which proposes to use the embedded smartphone accelerometers to find out if the user is moving and manage the activation on geolocation depending on whether the user is moving or not.

Following the same direction, US 2013/0085861 A1, related to persistent location tracking on mobile devices and location profiling, aims a system to engage geolocation systems based on the motion/rest condition of the device.

US 2013/0081442 A1 describes a method for correcting the orientation of a freely installed accelerometer in a vehicle. Directional or orientation vector of an accelerometer freely installed in a vehicle is obtained, in two steps: First, the gravity vector is obtained in a stationary situation (vehicle stopped). Second, a driving directional vector is obtained and the method tries to correct it using a Principal Component Analysis (PCA) applied to signal.

US 2016/0016590 A1 proposes a method for detecting driving events of a vehicle based on a smartphone, where driving events are detected using accelerometers and gyroscopes of a smartphone device. Driving events can be classified but in a very simple way: just as acceleration events and turn events.

In other related study, "Driver Classification and Driving Style Recognition using Inertial Sensors" by Van Ly et al. (Proceedings on IEEE Intelligent Vehicles Symposium, IV, 2013) a method to classify driving style based on inertial sensors using the vehicle's CAN bus is suggested.

Some other authors use smartphones as sensor platforms for driving style recognition. For example, Johnson et al. in "Driving Style Recognition Using a Smartphone as a Sensor Platform" (14th International IEEE Conference on Intelligent Transportation Systems, ITSC, , pp. 1609-1615, 2011) and Fazeen et al. in "Safe Driving Using Mobile Phones" (IEEE Transactions on Intelligent Transportation Systems, vol. 13, no. 3, pp. 1462-1468, 2012) use a smartphone in a fixed and calculated position inside the vehicle.

Finally, a method to estimate driving directional vector from non-automatically detected cornering situations has been proposed by Wahlström et al. in "IMU-based Smartphone-to-Vehicle Positioning" (IEEE Transactions on Intelligent Vehicles, vol. 1, Issue. 2, pp. 139-147, 2016).

Disadvantages of the existing solutions are:

- Many of existing proposals to characterize driving maneuvers use GPS data which means a high battery cost.
- For some other existing proposals, access to vehicle state information and additional hardware is needed, for instance vehicle speed, vehicle accelerometers information, steering angle, steering angle velocity, pedals position.
- Some of existing proposals need a prefixed smartphone location and position inside the vehicle.
- For many of them, smartphone has to be fixed along a journey because all calculation will be mistaken if a position change occurs.
- Finally, existing proposals for using cornering situations to calculate driving directional vector cannot automatically detect the existence of these cornering situations.

- To sum up, most of existing solutions impose restrictions for the smartphone inside a vehicle (be fixed, be connected to the vehicle, additional hardware...) or need additional information from energy demanding devices such as GPS.

Therefore, it is highly desirable to develop energy-efficient procedures for the automatic detection and classification of driving maneuvers without requiring geopositing sensors but using only accelerometer and gyroscope data to provide accurate in-vehicle detection applications.

**Summary of the invention**

The present invention solves the aforementioned problems and overcomes previously explained state-of-art work limitations by providing an energy-efficient method for classifying the driving maneuvers based on the estimation of a driving direction vector from inertial sensors data collected by a mobile user's terminal (e.g., a smartphone, tablet, etc.), which is placed in a non-fixed location and position inside a vehicle. The invention considers the case in that the user of the mobile terminal/device is the driver of the vehicle but also the user may be a passenger.

The estimation of the driving direction vector is performed in cornering driving situations (when the vehicle is essentially turning) and relies on (tri-axial accelerometer and gyroscope) signals from the IMU (Inertial Mobile Units) of the user's mobile device. Based on this estimation of the driving direction vector, the proposed method identifies vehicle's motion direction and, hence, characterizes specific driver's maneuvers with high accuracy by just using the IMU (accelerometer and gyroscope) signals.

The present invention provides a low computational complexity strategy for calculating the driving direction vector to classify the driving maneuvers. By relying on accelerometer data, the present invention opens the door for the deployment of Insurance Telematics services and applications over the new generation of smartphones which provide accelerometers and gyroscopes. Furthermore, this invention detects and characterizes driving maneuvers without using (at least in a continuous way) the geolocation systems of smartphones.

A first aspect of the present invention refers to a method for classifying driving maneuvers of a vehicle, which comprises the following steps:

- detecting a driving maneuver event by using data acquired from an inertial measurement unit (IMU), e.g., accelerometers and gyroscopes, of a mobile user device located in the vehicle;
- detecting position changes of the mobile user device in the vehicle and defining at least a driving time segment in which there is no detected position change of the mobile user device,
- estimating a gravity vector for each defined driving time segment,
- for each defined driving time segment, estimating a driving direction vector, which indicates a motion direction of the mobile user device, by using the gravity vector and the driving maneuver event obtained in the previous steps;
- classifying driving maneuvers based on the driving direction vector determining at least whether the detected driving maneuver event is a brake event, an acceleration event or a bidirectional accelerating event.

In addition, if the detected driving maneuver event is not a brake/acceleration event, the proposed method is able to classify the driving maneuver whether the detected event is a bumps/potholes event or a left/right (pure turns or mixed) turns event.

In a second aspect of the present invention, a mobile user device (e.g., smartphone or tablet) for classifying driving maneuvers in a vehicle is disclosed. The mobile user device comprises at least one accelerometer and gyroscope and further comprises processing means for implementing the method described before.

In a last aspect of the present invention, a computer program is disclosed, comprising computer program code means adapted to perform the steps of the described method, when said program is run on proccesing means of a user terminal (e.g., smartphone or tablet).

The method and user terminal in accordance with the above described aspects of the invention has a number of advantages with respect to prior art, which can be summarized as follows:

- The present invention only needs as input the signal of inertial smartphone sensors such as tri-axial accelerometers and tri-axial gyroscopes. Other signals, for instance GPS, are only used if they are available (and only very few samples) for a double checking algorithm but they are not necessary.

- In consequence, the present invention does not involve have a high battery cost in the mobile device.

- The present invention is robust to position changes of the mobile user device (smartphone or tablet), that is, it does not require the mobile device to be in a specific position or location inside the vehicle. Therefore, the mobile device can be freely installed and change its position without provoking incorrect calculations.

- No additional hardware is needed, just the smartphone working as an inertial measurement unit.

- The present invention can automatically detect a position change of the mobile user device inside the vehicle, for instance because the driver manipulates the device or an accidental movement itself. This allows reinitializing all calculations providing accurate results. Smartphone position change detection provides a segmentation of the signal into driving segments.

- Also, the present invention can automatically detect a cornering driving situation and, consequently, obtain a driving directional vector. Furthermore, a gravity vector can be obtained for each segment and allows obtaining more precise calculations by not taking into account events that could be related to bumps or potholes.

- A more accurate classification of driving maneuvers is performed with new categorizations such as pure turn events or mixed turn events. The invention allows the detection of a high number of different driving events, such as left/right turns, mixed events like roundabouts, and potholes among others. Such a wide range of possibilities enables the development of more accurate ways to characterize certain driver's behavior.

- The invention ameliorates the characterization of the driver's behavior to possible further assurance and discounts actuations. This characterization is not based on a simple maneuver classification, the method does not just classify maneuvers into acceleration and turn events, but provides an improved classification based on obtaining a driving directional vector, which is a more complete classification of the driving events and it allows further wide-ranging procedures to a better understanding of driver behavior.

- As driver does not need to interact with the mobile device, driving is performed in a natural and comfortable way.

- Moreover, the precise identification of driving maneuvers can help in developing route reconstruction algorithms using scarce and limited GPS information, if geopositioning data are available.

These and other advantages will be apparent in the light of the detailed description of the invention.

**Description of the drawings**

For the purpose of aiding the understanding of the characteristics of the invention, according to a preferred practical embodiment thereof and in order to complement this description, the following Figures are attached as an integral part thereof, having an illustrative and non-limiting character:

Figure 1 shows a flow chart of a method for classifying driving maneuvers using the data from the accelerometer and gyroscope of a mobile user device, according to a preferred embodiment of the invention.

Figure 2 shows a gravity vector with respect to the horizontal plane.

Figure 3A shows the principal axes obtained by PCA (Principal Component Analysis) procedure applied over accelerometer signals.

Figure 3B shows the principal axes obtained by PCA (Principal Component Analysis) procedure applied over gyroscope signals.

Figure 4 shows the gravity vector, centrifugal force vector, turn direction vector and driving directional vector on cornering situations.

Figure 5 shows an auxiliary vector calculated from the gravity and driving directional vectors.

Figure 6 shows an angle projection of a vector over a 90° axis.

Figure 7A shows event accelerometer sample vectors and the driving directional vector when the driving event is a break event.

Figure 7B shows event accelerometer sample vectors and the driving directional vector when the driving event is an acceleration event.

Figure 7C shows event accelerometer sample vectors and the driving directional vector when the driving event is a bidirectional acceleration event.

Figure 8A shows event accelerometer sample vectors and the driving directional vector when the driving event is a pure left turn event.

Figure 8B shows event accelerometer sample vectors and the driving directional vector when the driving event is a pure right turn event.

Figure 8C shows event accelerometer sample vectors and the driving directional vector when the driving event is a bidirectional pure turn event.

Figure 9A shows event accelerometer sample vectors and the driving directional vector when the driving event is a mixed left turn event.

Figure 9B shows event accelerometer sample vectors and the driving directional vector when the driving event is a mixed right turn event.

Figure 9C shows event accelerometer sample vectors and the driving directional vector when the driving event is a bidirectional mixed turn event.

**Preferred embodiment of the invention**

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

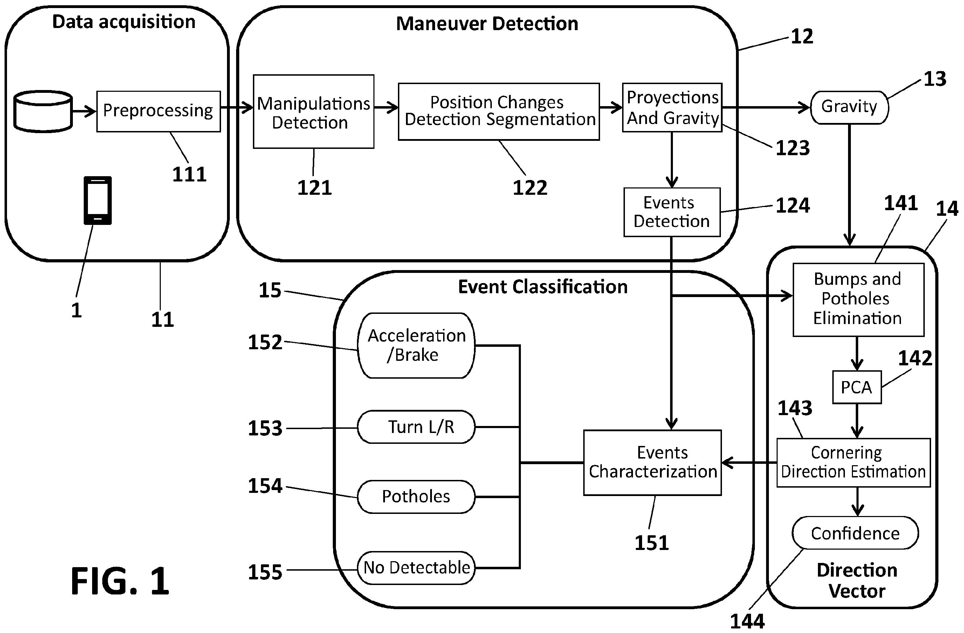

Figure 1 presents a main chart flow of the method steps, divided in four main tasks. The first two tasks in the diagram, Data Acquisition (11) and Maneuver Detection (12), are known in the prior-art and disclosed in US 2016/0016590 A1.

Task 1.- Data acquisition (11):

Measurements provided by the IMU sensors, accelerometer and gyroscope in this embodiment, of a mobile user device (1) are interpolated to obtain a signal, which is preprocessed (111) for detecting driving maneuvers of a vehicle. The interpolation provides a fixed sampling rate for all the sensor data independently of its technological characteristics. For pre-processing (111), a low-pass filtering is applied to these sensor data, both accelerometer and gyroscope data, in order to filter-out highfrequency components not related to regular driving dynamics. Filtered accelerometer data is affected by earth gravity. Therefore, the effect of gravity on the accelerometer are estimated and removed to keep only data related to vehicle acceleration. Besides the use of low-pass filtered information, raw (non-filtered) sensor data are used in an event detection algorithm to discriminate between regular driving events and manipulations or undesired movements of the mobile device (1), which can be a smartphone or a tablet.

Task 2.- Maneuver Detection (12):

Simple driving events are detected from the signals provided by the mobile device (1), e.g., smartphone. This implementation is covered up with some additional algorithms that help to detect driving directional vector and classify more accurately driver's behavior, as follows:

- Firstly, the method detects manipulation events (121) which are related to user's interaction with the mobile device (1). A hierarchical event identification is used in a preferred embodiment:

a) Manipulation events are first identified from raw gyroscope energy data, as time segments with smartphone uncontrolled movements by its user or displacements. In this way manipulation intervals are excluded to be analyzed when searching for following significant events.

b) Turn events identification, based on filtered gyroscope energy, represents the second level of processing. Time segments or intervals with important gyro energy will be important to help in the detection of events as cornering or aggressive turning maneuvers.

c) Acceleration, braking/accelerating, events identification, from vehicle acceleration component information.

d) Zig-zag events are identified as two or more change lanes from the significant measurements of the accelerometer, lateral acceleration, not accompanied by any angular velocity. As it is produced by a string of sharp turns, the gyroscope does not have time to measure any angular velocity.

e) Finally, the last level of hierarchical structure is composed by the detection of segments where the vehicle is stopped. Stop events are detected by looking for segments with low levels of acceleration energy considering also the gyroscopes energy.

The output of this manipulation events detection (121) is a set of significant driving events which is completed with an Aggressive Events Detection to identify those related to aggressive driving maneuvers. The Aggressive Event Detection is based on a first filter of significant events based on the maximum value of acceleration energy within all segment. Then, those significant events above an event-specific threshold are analyzed attending to their context, surrounding events, to detect the final sequence of aggressive driving events. Through recursive analysis the time sequence of events is analyzed allowing, for example, to combine close aggressive acceleration and turn events into a single aggressive cornering or turn maneuver event, or, as in the preceding example, to identify an aggressive braking when a high acceleration event precedes a stop even.

- Secondly, the method detects position changes (122) of the mobile device (1), as the mobile device (1) can be manipulated and its position is not fixed inside the vehicle. An estimation of these possible position changes is proposed in this invention. Time average of accelerometer signals is used as gravity vector estimation. Therefore a relevant change of this gravity vector must necessarily mean that device position has changed. For detecting this position change, two different exponential moving averages have been set up. The weight of each exponential moving average is a smoothing factor between 0 and 1. On one hand, the smoothing values is $\alpha$=0.005 for a slow average where slow changes on gravity vector will be noticed and quick changes, that could be related to driving events, will be ignored. On the other hand, the smoothing value is $\alpha$=0.1 for a quick average which detects quick changes on gravity vector and will also notice changes related to driving events. This moving average is presented as follows:

$$Av_1 = acc_1 \qquad\qquad for\ t > 1,\ Av_t = \alpha \cdot acc_t + (1 - \alpha) \cdot Av_{t-1}$$

The angle between slow and quick average vectors can be tracked during a given period of time, i.e. about 8 seconds, to detect a position change of the mobile device (1). Once a position change has been detected both slow and quick moving averages are re-started. Angular measurements between gravity vectors after detected position changes can be also used to detect situations where the smartphone returns to a previous position inside the vehicle.

Once a position change has been detected, segmentation of driving journeys between position changes is performed. In order to proceed with correct direction estimation, on each segment the mobile device (1) has to maintain the same position.

When other information, for example GPS information, is available, simple algorithms to confirm the segment is really a driving segment can be used. For example, if speed given by some samples of GPS exceeds a speed threshold it will be marked as driving segment.

Any of the existing procedures uses horizontal and vertical projection (123) over the whole segment can be used for events detection (124). For example, a gravity vector (13) can be obtained by averaging the acceleration signal over a big-size window, e.g. 100 seconds, and projecting acceleration data over horizontal plane. For further operations, it is necessary to have gravity vector estimation for each segment. This gravity vector (13) is obtained, on each segment, by removing detected manipulations and events from segment accelerometer signals and averaging the remaining signal.

Task 3.- Estimation (14) of a Driving Direction Vector:

The accurate classification of each driving maneuver is based on knowing the orientation of the mobile device (1) inside the vehicle. This requires estimating vector in the coordinates system of the mobile device (1) pointing at the vehicle reference system. This vector is so called here driving direction vector as indicates the vehicle's motion direction. Gravity vector (13) obtained from previous phases of the method together with detected events (124), allows the estimation (14) of the driving direction vector as follows:

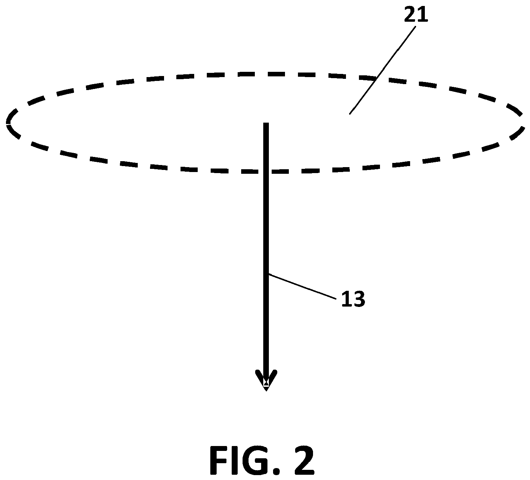

-   In order to obtain a good estimation, noisy events, bumps and potholes, which are not related to strictly speaking driving maneuvers, are firstly removed (141). As a gravity vector (13) is also available, some of the detected events (124) can be considered as not driving events. Driving events samples are represented as a sequence of accelerometer vectors which must be distributed in an horizontal plane (21), as shown in Figure 2, which is orthogonal to gravity vector (13). Consequently, if a detected event has not checked this condition, this event will be removed from those ones used to estimate the driving vector. This algorithm works as a double checking for the events detected before (124) from horizontal projection.

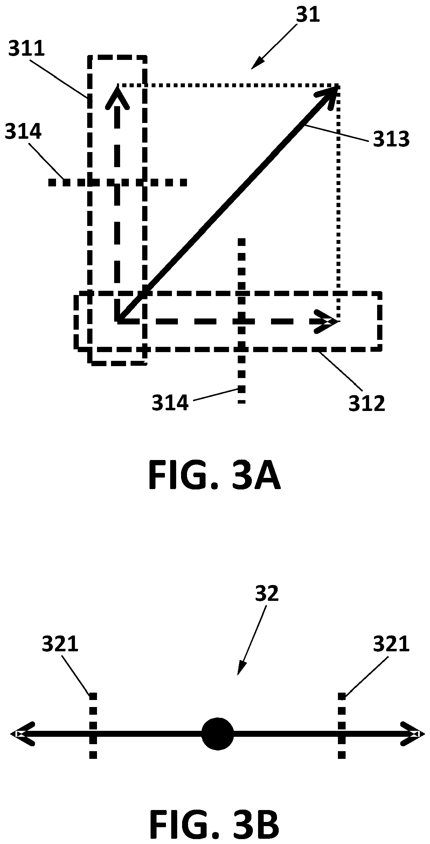

-   After removing those non-driving events, a principal components analysis, PCA (142), is applied, as shown in Figure 3A, over the accelerometer samples (31) of remaining events. As it is known that accelerometer samples (31) corresponding to driving forces must be distributed on a horizontal plane (21) as shown in Figure 2, by applying the well-known PCA technique on tri-axial accelerometer signals, two principal axes (corresponding to the two main PCA components) can be obtained, as shown in Figure 3A: a longitudinal one (311) corresponding to rear-front forces and a transversal axis (312) corresponding to left-right forces. So, finally, accelerometer samples are projected (313) onto both axes. However, it cannot be known a priori which of the projections belongs to longitudinal or transversal forces. Apart from this, another PCA is applied over the set of tri-axial gyroscope samples (32) in those valid events presenting enough rotation energy. In this case, only one PCA projection is relevant as turn events related to driving maneuvers only rotates with regard to a single turning axis, which is parallel to the gravity vector (13).

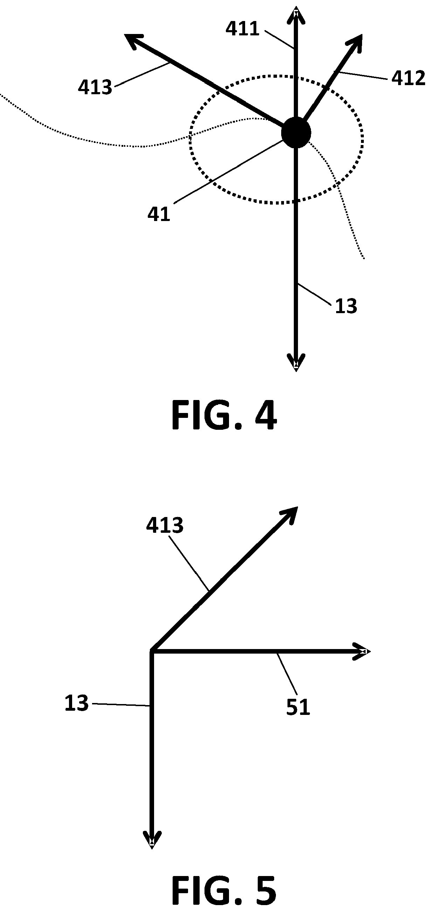

-   After obtaining the PCA projections previously described, the next step is the cornering situation estimation (143). A cornering situation (41) is illustrated in Figure 4 and it is defined as a point where the vehicle is turning while driver is not accelerating nor braking. For this objective, turn-related signals as tri-axial gyroscope signals are used. PCA was calculated over gyroscope signals (32), as shown in Figure 3B: and if their projection on the first PCA component, which is a projection over turning axis, exceeds a high threshold (321) obtained from a percentile of 80 % of the samples of the gyroscope signals (32) projection obtained before, it can indicate only turning strength. Once these cornering situations are detected, the strength of accelerometer samples (31) projected on principal components is considered. In order to have a good robustness in estimation results, a minimum of five high strength accelerometer samples in a row, which are exceeding a threshold (314), e.g. 1.5 m/s$^2$, is required. Considering that a cornering ought to have a pure centrifugal force, accelerometers projections obtained by PCA must be pure too. This means that, at least, a high percentage of accelerometer strength has to be projected only on a principal component. Normally, this high strength component corresponds to the centrifugal force (412) which follows the direction-transversal left-right axis. Once cornering samples are marked, cornering accelerometer samples are considered as centrifugal force (412). This centrifugal force (412) is perpendicular to driving directional vector (413). On cornering situations (41), accelerometer and gyroscope samples are orthogonal too. The gyroscope cornering samples determine a turn direction vector (411). Knowing that gyroscope signal is positive or negative depending on the turn direction (411), left or right, a cross product between gyroscope samples and accelerometer samples on cornering situations results in a driving directional vector (413) sample referred to that cornering situation, i.e.:

$$directional\ sample = gyroscope\ sample \times accelerometer\ sample$$

-   By averaging all driving directional vector samples for all cornering situations (41) estimated (143) in a segment, a driving directional vector (413) can be obtained for each particular driving segment.

-   An accurate estimation of the driving directional vector (413) is very important to obtain a precise characterization of driving maneuvers. Therefore, an auto-evaluation algorithm is performed so that, for a given segment, there can be several cornering events where several direction vectors can be estimated. The coherence between these possible estimations can be used to design an algorithm suitable to provide a confidence measure (144) of the final driving directional vector estimation process. Although several other algorithms can be used, in this particular embodiment four different confidence measures (144) are calculated, based on the following features:

- Number of cornering situations detected in the segment.
- Angle between all the averaged driving directional vectors for each cornering situation.
- Number of samples estimated as cornering.
- Angle between all driving directional vectors samples.

- A final confidence value can be obtained as the average of several particular confidence measures (144).

$$conf1 = \left[1 - \frac{1}{1 + nb\ of\ cornerings}\right] \cdot 100$$

$$conf2 = \left[\left(\frac{180 - angle\ between\ averaged\ cornering\ situations}{180}\right)^2\right] \cdot 100$$

$$conf3 = \left[1 - \frac{1}{nb\ of\ cornering\ samples}\right] \cdot 100$$

$$conf4 = \left[\left(\frac{180 - angle\ between\ cornering\ samples}{180}\right)^2\right]$$
$$\cdot 100$$

$$confidence = mean(conf1, conf2, conf3, conf4)$$

- This final confidence measurement has an exceptional situation. When only one cornering situation is detected, the second confidence is fixed as value of 50.

Task 4.- Driving event classification (15):

- Once a final driving directional vector (413) has been estimated (143), the general driving events detected (124) as described before can be classified (15) in a more accurate way. For this event classification (15), a comparison of mean angles between events and some key vectors is calculated. These key vectors are:

  - The gravity vector (13)
  - The driving directional vector (413)
  - And an auxiliary vector (51) which is orthogonal to the previous ones, and, by applying a cross product, is always pointing to right plane, as shown in Figure 5.

auxiliary vector (51) = gravity vector (13)

$directional\ sample = gyroscope\ sample \times$

$accelerometer\ sample$ directional vector (413)

- The interest of the auxiliary vector (51) is that it is always pointing right when looking to driving directional vector (413). This means that if centrifugal force vector (412) has the same direction than this auxiliary vector (51), the proposed method can classify a turn event as left turn event, i.e., it is turning to left.

- Using these angles between events and the aforementioned key vectors, a hierarchical classification (151) for each event is obtained. In order of classification, events are firstly evaluated as brake/acceleration (152), secondly bumps/potholes (154) are determined, then as left/right turns (153) are determined, looking firstly for pure turns and then for mixed turns, and finally those events that cannot be classified (155).

- Event classifier relies on the calculation of the angle between two vectors. This angle is calculated as follows:

$$\theta = \cos^{-1}\left(\frac{\vec{u} \cdot \vec{v}}{|\vec{u}| \cdot |\vec{v}|}\right) \; being \; \vec{u} \; and \; \vec{v} \; two \; vectors$$

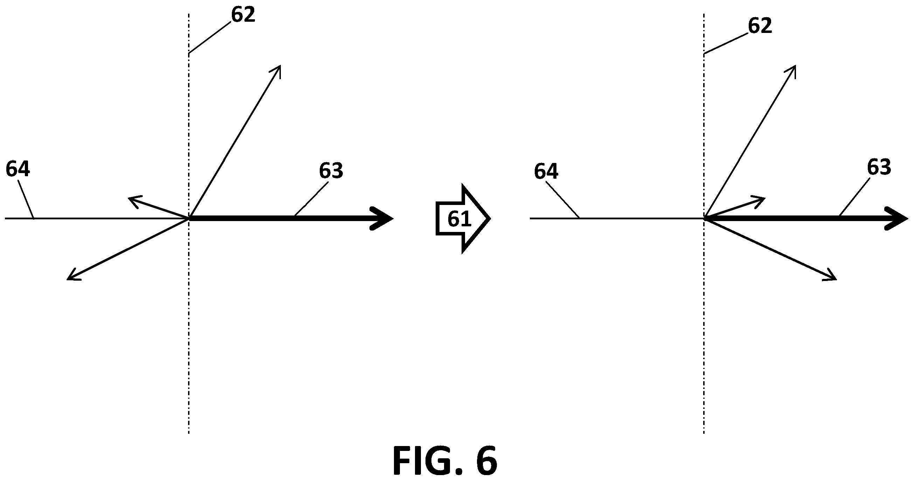

- Another important task for the classification of events is an angle projection (61) over a 90 degrees axis or vertical axis (62), perpendicular to the horizontal plane (21), as shown in Figure 6. This projection (61) provides the angle between one vector and, not another vector (63), but to the axis (64) on which it is relying.

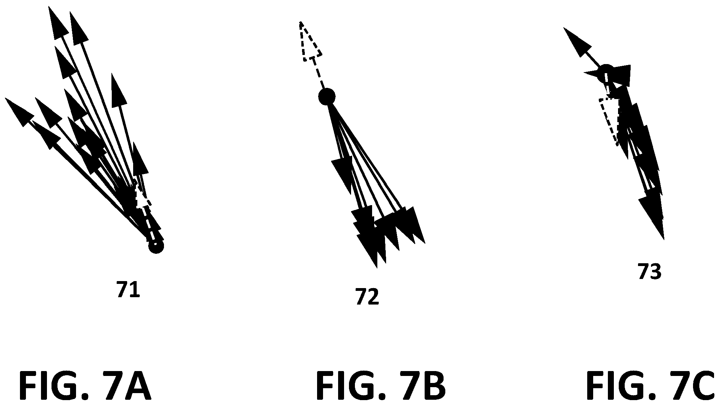

- For a better comprehension of resulting driving event classes, they are defined below and illustrated respectively in Figures 7A-7C, 8A-8C and 9A-9C, where the dashed arrow corresponds to the driving directional vector (413) and arrows drawn in continous lines are event accelerometer samples represented as accelerometer sample vectors:

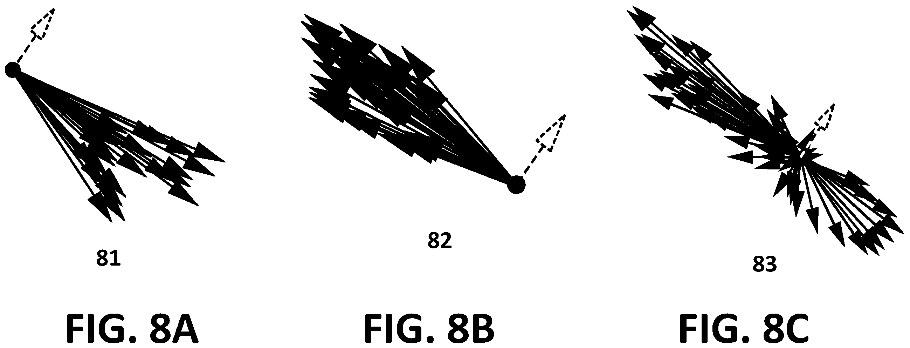

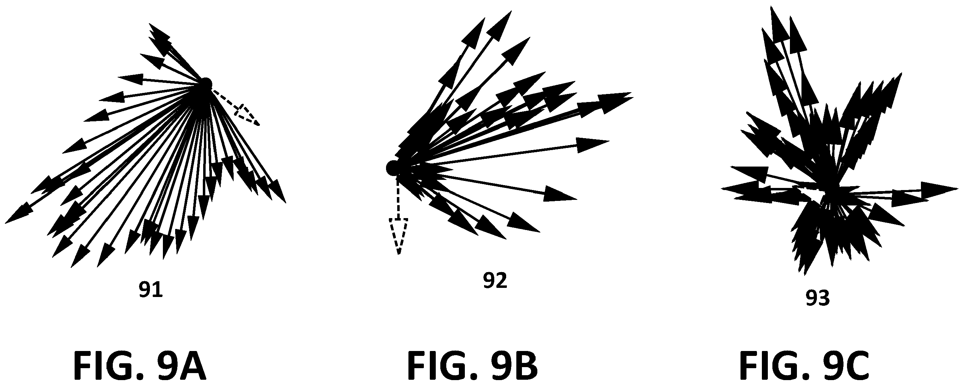

  ▪ Brake event (71): a brake event, as shown in Figure 7A, is an event where accelerometers signals present high energy, i.e. above a threshold, and speed is decreasing. Acceleration sample vectors are pointing towards the so-called driving directional vector (413).
  ▪ Acceleration event (72): an acceleration event, as shown in Figure 7B, is an event where accelerometers signals present high energy, i.e. above a threshold, and speed is increasing. Acceleration samples are pointing on the opposite of driving directional vector (413) but they are still parallel to it.
  ▪ Bidirectional accelerating event (73): a bidirectional accelerating event, as shown in Figure 7C, is an event where a brake is followed by acceleration or vice versa. All accelerometer samples are parallel to driving directional vector (413) but they are not pointing to the same place. This type of event may show a driving situation where the box-gear going down the gears when driver is braking.
  ▪ Left (81) pure turn event, as shown in Figure 8A, and Right pure turn event (82), as shown in Figure 8B: a pure turn event (81, 82) is an event where the vehicle is taking a curve and a centrifugal force (412) is produced. The term "pure" refers to the fact that there are not accelerating/braking forces together with the centrifugal force (412). In other words, this means that the vehicle is not braking nor accelerating before or after taking the curve. Accelerometer samples are parallel to centrifugal force (412), pointing all to it or to opposite.
  ▪ Bidirectional pure turn event (83): a bidirectional pure turn event, as shown in Figure 8C, is a special type of pure turn event where two, or more, different curves are connected. The vehicle is taking these curves without braking or accelerating, for example in a roundabout. All accelerometer samples are parallel to centrifugal force (412) but they are not pointing to the same place.
  ▪ Mixed turn events: a mixed turn event, shown in Figure 9A-9C, is an event where the vehicle is taking one, or more curves. In this case, the vehicle will perform a brake before entering the curve and it will accelerate at the end of it. This events are classified also as left turn event (91) as shown in Figure 9A, right turn event (92) as shown in Figure 9B, or bidirectional turn event (93) as shown in Figure 9C. There are some accelerometer samples parallel to centrifugal force (412) and some others parallel to driving directional vector (413).

- To perform the previous classification of driving maneuvers, first, the mean angle between acceleration vector samples in event and the driving directional vector (413) is evaluated. Each sample forms an angle with regard to driving directional vector (413). By projecting (61) those among the 90 degrees axis (62), an angle of 180 degrees will be considered as an angle of 0 degrees. By averaging all projected angles of each event, it is possible to conclude that it is an accelerating/brake event (152) if the averaged angle is below a specific threshold. This threshold is a low angle, for instance in this embodiment an angle of 30 degrees is used. After this classification, the accelerating/brake events (152) are classified depending on normal angles, not on projected angles, as follows:

  ▪ By comparing the average of each sample angle to the driving directional vector (413) with a low threshold, for instance, 30 degrees, the event could be characterized as a braking event (71) if this average angle is below this threshold.
  ▪ In contrast, if event samples are pointing to the opposite side than the driving directional vector (413), the vehicle is accelerating (72). For this purpose, a new threshold has been set up, for instance on this case, 150 degrees, and the average angle of the event must be over this threshold.
  ▪ Otherwise, if the first condition with the projected angles is accomplished, and none of the two previous conditions are, the event is considered as a bidirectional accelerating event (73).

- Secondly, events which are not located on the horizontal plane (21) need to be characterized as bumps/potholes events (154). These events are considered as pothole or bump situations because their samples are parallel to the gravity vector (13). Consequently, in order to obtain this characterization, event average angle with regard to the gravity vector (13) and its projection (61) with respect to horizontal plane (21) has to be below a threshold to be considered as a bump/pothole event (154). On this case, the algorithm is very restrictive with the threshold because a real driving event must be on the horizontal plane (21). The threshold could be of 60 degrees with regard to gravity vector (13).

  ▪ Following a similar process as when detecting accelerating events (152), but using as reference the gravity vector (13), pure bumping/pothole events (154) are detected. This means that there are no parasite forces which are on the horizontal normal driving plane (21), so this event is completely isolated from driving events. So pure bumping/pothole events (154) can be detected using the projected average angle (61) among 90 degrees to gravity vector (13). This angle has to be below a threshold, for instance, 30 degrees from gravity vector (13).
  ▪ No pure bump/pothole events (154) mean that some event samples are on horizontal plane (21). In these cases classification can use the projected angle (61) with the previously explained auxiliary vector (51). By using a high threshold of 80 degrees to this auxiliary vector (51), it can be assumed that bump/pothole events (154) can have a braking or accelerating force apart from the parallel to gravity vector (13).
  ▪ The rest of bump/pothole events are not classifiable. This means that they have some parasite forces on horizontal plane (21) but it is not possible to characterize a driving event from them.

- By taking into account again the projected angle (61) to driving directional vector (413) and by fixing a high threshold to be exceeded, 60 degrees for instance, pure turn events can be characterized. A pure turn event is a turn event (153) which does not have any accelerating force, typically a road wide turn without braking or accelerating.

  ▪ By comparing the samples of this kind of turn with the auxiliary vector (51) described before, the event can be classified as a left turn (81) if average angle is lower than 30 degrees from it, or as a right turn (82) if average angle is over 150 degrees from it. Finally, it is considered as a bidirectional pure turn event (83) if none of the two previous conditions is accomplished.

- If it is not a pure turn event, the method evaluates the average angle with respect to the driving directional vector (143) without projecting it. If it is between 60 and 120 degrees, the turn event (153) is considered as a mixed turn event. This means that it not only has a centrifugal force (412), but also it has braking and accelerating forces.

  ▪ Following a similar approach as in the previous case, by comparing the average angle with the auxiliary vector (51), an event is classified as a left mixed turn event (91) if the average angle is lower than 60 degrees, and the event is classified as a right mixed turn event (92) if the average angle is over 120 degrees. Finally, if the average angle is between 60 and 120 degrees with regard to the auxiliary vector (51), the event is classified as a bidirectional mixed turn event (93).

- If none of the conditions described before have been accomplished, the event cannot be classified (155). This normally means that event samples are so widespread on the horizontal plane (21) that the method is not able to recognize an event pattern.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for classifying driving maneuvers in a vehicle, the method comprising:

   - detecting (12) at least a driving maneuver event (124) by using data acquired (11) from an inertial measurement unit of a mobile user device (1) located in the vehicle,
   - detecting position changes (122) of the mobile user device (1) in the vehicle,

- defining at least a driving time segment in which there is no position change of the mobile user device (1) detected,
- estimating a gravity vector (13) for each defined driving time segment,

the method **characterized by** further comprising:

- estimating (14) a driving direction vector (413) for each defined driving time segment by using the estimated gravity vector (13) and the detected driving maneuver event (124), the driving direction vector (413) indicating a motion direction of the mobile user device (1);
- classifying brake and acceleration events (152) by determining whether the detected driving maneuver event (124) is a brake event (71), an acceleration event (72) or a bidirectional accelerating event (73) based on the driving direction vector (413).

2. The method according to claim 1, wherein classifying brake and acceleration events (152) further comprising comparing acceleration sample vectors of data acquired (11) from an accelerometer of the mobile user device (1) and the driving direction vector (413) as follows:

- the detected driving maneuver event (124) is determined to be a brake event (71) if all the acceleration sample vectors point towards the driving direction vector (413),
- the detected driving maneuver event (124) is determined to be an acceleration event (72) if all the acceleration sample vectors point oppositely to the driving direction vector (413),
- the detected driving maneuver event (124) is determined to be a bidirectional acceleration event (73) if all the acceleration sample vectors point parallely to the driving direction vector (413).

3. The method according to claim 2, further comprising comparing an angle between an average projection (61) of all the acceleration sample vectors over a vertical axis (62) and the driving direction vector (413) with a threshold to determine whether the detected driving maneuver event (124) is a brake event (71), an acceleration event (72) or a bidirectional accelerating event (73).

4. The method according to any preceding claim, further comprising classifying bumps and potholes events (154) by comparing acceleration sample vectors of data acquired (11) from an accelerometer of the mobile user device (1) and the gravity vector (13) determining if all the acceleration sample vectors are parallel to the gravity vector (13).

5. The method according to claim 4, further comprising comparing an angle between an average projection (61) of all the acceleration sample vectors over an horizontal plane (21) and the gravity vector (13) with a threshold to determine whether the detected driving maneuver event (124) is a pure bumps and potholes events (154) with no acceleration sample vectors on the horizontal plane (21) or not.

6. The method according to any preceding claim, further comprising:

- obtaining an auxiliary vector (51) which is orthogonal to both the gravity vector (13) and the driving direction vector (413), the auxiliary vector (51) having the same direction than a centrifugal force (412) vector obtained from acceleration sample vectors of data acquired (11) on cornering situations (41) from an accelerometer of the mobile user device (1);
- classifying turn events (153) by comparing the auxiliary vector (51) and the driving direction vector (413).

7. The method according to claim 6, wherein classifying turn events (153) comprising;

- comparing an angle between the auxiliary vector (51) and a projection (61) of the driving direction vector (413) over an horizontal plane (21) with a first threshold to determine whether the detected driving maneuver event (124) is a pure turn event, and
- comparing an angle between the auxiliary vector (51) and the driving direction vector (413) with a second threshold to determine whether the detected driving maneuver event (124) is a mixed turn event.

8. The method according to any preceding claim, wherein estimating (14) the driving direction vector (413) for a defined driving time segment comprising:

- obtaining directional vector samples by a cross product between acceleration sample vectors of data acquired (11) from an accelerometer of the mobile user device (1) and gyroscope sample vectors of data acquired (11) from a gyroscope of the mobile user device (1),

- estimating (143) cornering situations (41) by applying a principal component analysis over the gyroscope sample vectors,

- averaging all the directional vector samples in the defined driving time segment for all estimated cornering situations (41).

9. The method according to any preceding claim, wherein estimating (14) the driving direction vector (413) for a defined driving time segment further comprising calculating a final confidence value by averaging four confidence measures (144) calculated respectively based on:

- number of estimated cornering situations (41),
- angle between all the averaged directional vector samples for each cornering situation (41),
- number of gyroscope sample vectors estimated as cornering situations (41),
- angle between all the driving direction vectors (413) estimated for all the defined driving time segments

10. A mobile user device (1) for classifying driving maneuvers in a vehicle, the mobile user device (1) with at least an inertial measurement unit, **characterized by** further comprising processing means configured to perform the method according to any of claims 1-9.

11. The mobile user device (1) according to claim 10, wherein the inertial measurement unit is selected between an accelerometer and a gyroscope.

12. The mobile user device (1) according to any of claims 10-11, which is a smartphone.

13. The mobile user device (1) according to any of claims 10-12, which is a tablet.

14. A computer program product comprising program code means which, when loaded into processing means of a mobile user terminal (1), make said program code means execute the method according to any of claims 1-9.

FIG. 1

**FIG. 2**

**FIG. 3A**

**FIG. 3B**

FIG. 4

FIG. 5

**FIG. 6**

EP 3 396 317 A1

**FIG. 7A**

71

**FIG. 7B**

72

**FIG. 7C**

73

FIG. 8A

FIG. 8B

FIG. 8C

**FIG. 9A**

91

**FIG. 9B**

92

**FIG. 9C**

93

Europäisches
Patentamt

European
Patent Office

Office européen
des brevets

# EUROPEAN SEARCH REPORT

**Application Number**

EP 17 38 2221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 975 867 A1 (TELEFONICA DIGITAL ESPAÑA S L U [ES]) 20 January 2016 (2016-01-20) * paragraphs [0011] - [0039], [0051]; figures 2,3,4 * | 1,10, 12-14 | INV. G01C21/16 G06Q40/08 |
| A,D | "Driving Behavior Analysis for Smartphone-based Insurance Telematics" In: WAHLSTROM ET AL.: "Proceedings of the 2nd workshop on Workshop on Physical Analytics", 2015, ACM, XP002775196, pages 19-24, * the whole document * | 1,10 | |

-----

-----

| TECHNICAL FIELDS SEARCHED (IPC) |
|---|
| G08G G01C G06Q |

The present search report has been drawn up for all claims

| Place of search | Date of completion of the search | Examiner |
|---|---|---|
| The Hague | 31 October 2017 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 38 2221

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2017

| Patent document cited in search report | | Publication date | Patent family member(s) | | Publication date |
|---|---|---|---|---|---|
| EP 2975867 | A1 | 20-01-2016 | EP 2975867 A1 | | 20-01-2016 |
| | | | US 2016016590 A1 | | 21-01-2016 |

For more details about this annex : see Official Journal of the European Patent Office, No. 12/82

EPO FORM P0459

**EP 3 396 317 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130085861 A1
- US 20130081442 A1
- US 20160016590 A1

**Non-patent literature cited in the description**

- Driving Behavior Analysis for Smartphone-based Insurance Telematics. **WAHLSTRÖM et al.** Proceedings of the 2nd workshop on Workshop on Physical Analytics. ACM, 2015, 19-24
- Intelligent Energy-Efficient Triggering of Geolocation Fix Acquisitions Based on Transitions between Activity Recognition States. **PHAN.** Mobile Computing, Applications and Services. Springer International Publishing, 2013, 104-121
- **OSHIN et al.** A method to evaluate the energy-efficiency of wide-area location determination techniques used by smartphones. *IEEE 15th International Conference on Computational Science and Engineering, CSE,* 2012, 326-333
- **VAN LY et al.** Driver Classification and Driving Style Recognition using Inertial Sensors. *Proceedings on IEEE Intelligent Vehicles Symposium,* 2013, vol. IV
- **JOHNSON et al.** Driving Style Recognition Using a Smartphone as a Sensor Platform. *14th International IEEE Conference on Intelligent Transportation Systems, ITSC,* 2011, 1609-1615
- **FAZEEN et al.** Safe Driving Using Mobile Phones. *IEEE Transactions on Intelligent Transportation Systems,* 2012, vol. 13 (3), 1462-1468
- **WAHLSTRÖM et al.** IMU-based Smartphone-to-Vehicle Positioning. *IEEE Transactions on Intelligent Vehicles,* 2016, vol. 1 (2), 139-147

**23**